# EUROPÄISCHE PATENTANMELDUNG

(11) **EP 1 939 151 A1**
(43) Veröffentlichungstag der Anmeldung: **02.07.2008**
(21) Anmeldenummer: 07123204.5
(22) Anmeldetag: 14.12.2007
(51) Int. Cl.: C04B 20/12, C04B 26/02, C04B 38/00

(54) **Poröse Festkörper mit Beschichtung**

(30) Priorität: 27.12.2006 DE 102006061666
(71) Anmelder: Siebrecht, Ralf, 45665 Rechklinghausen (DE)
(72) Erfinder: Siebrecht, Ralf, 45665 Rechklinghausen (DE)
(74) Vertreter: Betten & Resch

(57) **Zusammenfassung**

Die Erfindung betrifft einen Verbundkörper (10), insbesondere zur Verwendung als Wärmedämmmaterial, umfassend einen Kern (12) aus einem porösen Festkörper und eine den Kern (12) umschließende Ummantelungsschicht (14). Die Erfindung betrifft ferner ein Verfahren zur Herstellung eines derartigen Verbundkörpers sowie eine Vorrichtung zur Durchführung des Verfahrens.
Die vakuumisolierten Aerogelkugeln können durch Kunstharz oder Sintern als Verbundmaterial monolithischer Größe zusammengefügt werden. Dieses Verbundmaterial ist abriebfest und läßt sich ausschneiden.

## Beschreibung

Die vorliegende Erfindung betrifft einen Verbundkörper, insbesondere zur Verwendung als Wärmedämmmaterial, sowie ein Verfahren zur Herstellung eines derartigen Verbundkörpers und eine Vorrichtung zur Durchführung dieses Verfahrens.

Insbesondere betrifft die vorliegende Erfindung einen Verbundkörper, der auf einem porösen Festkörper basiert.

Zeolite, Silikatgele, Aerogele, Xerogele und Kryogele sind bspw. hochporöse Festkörper, die sich durch geringe Massendichten, nanoskopische bis mikroskopische Porösitäten und große innere Oberflächen auszeichnen. Silikatgele, die zum Beispiel weltweit unter dem Namen "Aerosil" bekannt sind, werden pyrolytisch auf der Basis organischer Moleküle hergestellt. Beim Herstellungsprozess entstehenden submilimeter-große Siliziumdioxid- (SiO₂-) Agglomerate, die sich aus nanometergroßen Partikeln zusammensetzen. Durch Verpressen dieser Materialien erhält man große, hochporöse Festkörper mit physikalischen Eigenschaften, die denen von Aerogelen ähnlich sind. Zeolite, die meist aus Metalloxiden wie zum Beispiel Al₂O₃ bestehen, weisen besonders kleine Porengrößen auf, die im Subnanometerbereich liegen. Im weiteren Verlauf beziehen wir uns häufig auf Aerogele, da diese zum Einen hochporöse Festkörper sind und zum Anderen historisch bereits vor den thermisch-pyrogenen Kieselsäuren bekannt waren.

Aerogele werden durch die überkritische oder unterkritische Trocknung organischer oder anorganischer Gele hergestellt. Wir verwenden hier den Begriff "Aerogel" übergreifend für Aerogele, Xerogele und Kryogele. Der am häufigsten anzutreffende Aerogeltyp wird mit dem so genannten Solgelverfahren aus Wasserglas durch überkritisches Trocknen hergestellt und besteht als Endprodukt aus einem hochporösen Gerüst von molekularem Siliziumdioxid (SiO₂). Dessen Festkörperdichte kann je nach Herstellungsverfahren zwischen 0,01 g/cm³ und 0,1 g/cm³ schwanken. Die mittlere Porengröße der molekularen Gerüststrukturen hängt eng mit der Dichte zusammen und kann zwischen einigen zehntel Mikrometern und wenigen Nanometern variieren.

Die hochgradig poröse Struktur von Aerogelen verleiht diesen außergewöhnliche mechanische, thermodynamische und optische Eigenschaften. Das Interesse an einer industriellen Nutzung dieser Eigenschaften fokussiert sich vor allem auf die geringe Wärmeleitfähigkeit. Häufig werden deshalb konstruktive Bauelemente auf der Basis von Aerogelen vorgeschlagen, die der Wärmeisolierung in Gebäuden dienen.

In einigen Fällen wird gleichzeitig die hohe Transparenz im sichtbaren Spektralbereich genutzt, die man bei einer Vielzahl von Aerogelen vorfindet. Das durch die Aerogelstruktur tretende Licht wird dabei deutlich diffus gestreut. Diesbezüglich zitierte Anwendungen sind zum Beispiel thermisch isolierende Konstruktionselemente zur Schaffung von Fenstern und Oberlichtern, die zur indirekten Ausleuchtung von Räumen dienen. Es wird zurzeit an monolithischen Aerogelstrukturen geforscht, die der Transparenz von Fensterglas nahe kommen sollen. Sowohl die diffuse Lichtstreuung als auch die geringe Wärmeleitfähigkeit werden durch die poröse Festkörperstruktur der Aerogele bestimmt. Silikatgele hingegen sind in der Regel nicht transparent.

Bei der Beschreibung des Wärmetransports werden allgemein drei Mechanismen unterschieden: Wärmeleitung, Wärmestrahlung und Konvektion.

Wärmeleitung findet in Festkörpern und Flüssigkeiten statt, und im Fall von Festkörpern spricht man auch von Festkörperwärmeleitung. Dabei wird Wärmeenergie von der wärmeren zur kälteren Seite durch atomare beziehungsweise molekulare Schwingungen übertragen, ohne dass dabei Masse transportiert wird.

Bei der Wärmestrahlung wird Energie durch elektromagnetische Wellen, wie zum Beispiel Infrarotstrahlung, übertragen. Jeder Körper strahlt Energie ab, welche nach dem Stefan-Boltzmann-Gesetz näherungsweise proportional zur vierten Potenz seiner Temperatur ist. Die Wellenlängenverteilung, die so genannte spektrale Verteilung, wird mit Hilfe der Planck'schen Kurve beschrieben und ihr Maximum ist durch das Wien'sche Verschiebungsgesetz gegeben. Der Wärmetransport durch elektromagnetische Strahlung benötigt keinen materiellen Wärmeüberträger und findet deshalb zum Beispiel auch im Vakuum statt.

Die Wärmeübertragung durch Konvektion erfolgt durch Strömung oder Ortsänderung von Atomen und Molekülen in Gasen und Flüssigkeiten - es findet also Massentransport statt. Weiterhin unterscheidet man zwischen freier und erzwungener Konvektion, je nachdem, ob die Ursache innere Kräfte (lokale Temperatur- oder Dichteunterschiede zum Beispiel) oder äußere Kräfte (mechanische Druckdifferenzen zum Beispiel) sind.

Die Summe der drei Beiträge aus Festkörperwärmeleitung, Wärmestrahlung und Gaskonvektion legt in der Regel die Gesamtwärmeleitfähigkeit eines Dämmstoffes fest.

Aerogele auf Silikatbasis besitzen im infraroten Wellenlängenbereich zwischen 3 µm und 5 µm eine relativ hohe Durchlässigkeit. Mit steigender Temperatur nimmt der Anteil der durch Infrarotstrahlung transportierten Wärme zu und wird oberhalb von 200 °C schließlich dominant.

Die Festkörperwärmeleitung von Aerogelen kann, abgesehen von der chemischen Zusammensetzung, nur über die Massendichte des Materials beeinflusst werden. Je geringer die Dichte ist, desto geringer ist auch die Festkörperwärmeleitung. Eine geringere Dichte bringt aber eine erhöhte Porengröße mit sich, was zu einer erhöhten Wärmeleitung durch Gaskonvektion führt. Hinzu kommt, dass der Anteil der Festkörperwärmeleitung an der Gesamtwärmeleitung bereits sehr klein ist. Eine zusätzliche Verringerung der Festkörperwärmeleitung würde deshalb nur einen wenig durchschlagenden Effekt auf die Gesamtwärmeleitung zeigen.

Der Anteil der konvektiven Wärmeleitung lässt sich hingegen relativ einfach verringern. In Luft, bei Raumtemperatur und unter Normaldruck wird Wärme in Aerogelen hauptsächlich durch Gaskonvektion übertragen. Genauer gesagt sind es vor allem die N₂- und O₂-Moleküle der Luft, die an diesem Vorgang beteiligt sind.

Unter den oben genannten Normalbedingungen ist die mittlere Porengröße in den meisten Aerogelen vergleichbar mit den mittleren freien Weglängen der Gasmoleküle. Die mittlere freie Weglänge bezeichnet die Distanz, die ein Molekül im Mittel zurücklegt, bevor es mit einem anderen Molekül zusammenstößt und dabei Wärmeenergie überträgt. Die durch Gaskonvektion in einem Aerogel hervorgerufene Wärmeleitung erniedrigt sich, wenn die mittlere freie Weglänge größer als der mittlere Porendurchmesser des Aerogels wird. Ist Letzteres erfüllt, dann ist der Stoß eines Gasmoleküls mit dem umgebenden Aerogelgerüst wahrscheinlicher als der Stoß mit einem anderen Gasmolekül. Die Wärmeleitung durch Konvektion wird somit unwahrscheinlich und Energie wird eher durch die deutlich schwächere Festkörperwärmeleitung übertragen.

Der einfachste Weg zur Vergrößerung der mittleren freien Weglänge der Gasmoleküle ist eine Verringerung des Gasdrucks. Dabei ist bemerkenswert, dass bei Aerogelen bereits ein geringes Vakuum (im Bereich von einigen mbar) ausreicht, um die thermische Isolierung deutlich zu verbessern. Äquivalente Isolationswerte würde man mit einem klassischen System, wie zum Beispiel mit einem Dewargefäß oder einer Thermoskanne, nur mit Hilfe eines hohen Vakuums (unterhalb von 10⁻³ mbar) und verspiegelten Innenflächen erreichen.

Aus diesen Gründen wurde bereits der Einsatz derartiger poröser Festkörper zur Verwendung als Wärmedämmmaterial vorgeschlagen. Beispielsweise offenbart die DE 35 33 805 A1 ein Verfahren zur Herstellung von lsolierscheiben, bei dem Aerogelkügelchen den Zwischenraum zwischen zwei zueinander parallel angeordneten Scheiben ausfüllen.

Auch die EP 0 468 124 A1 offenbart ein derartiges Verfahren, bei dem granulare Aerogele auf Siliziumdioxid-Basis zwischen Platten eingefüllt werden, um ein Wärmedämmmaterial zu erhalten.

Schließlich ist es aus der DE 33 47 619 A1 bekannt, mikroporöses Dämmmaterial auf der Basis von Kieselsäure-Aerogel mit einer Umhüllung in Form einer Verbundfolie zu versehen, in der dieses Granulat in Plattenform gepresst wird, um dann als Wärmedämmplatte einsetzbar zu sein.

All diese Systeme müssen vorgefertigt werden und können vor Ort nicht in ihrer Größe verändert werden. Insbesondere ist bei den meisten derartigen Systemen eine Vakuumisolierung vorgesehen, d. h. das Aerogel-Granulat wird bspw. zwischen Platten eingefüllt, dann gasdicht eingeschlossen und evakuiert. Ein etwaiges Zuschneiden eines derartigen Systems führt zwangsläufig zur Zerstörung der Vakuumisolierung. Gerade das Zuschneiden von konventionellen Dämmstoffen, die man im Handel als Plattenware (bspw. geschäumtes Polystyrol oder Polyurethan) oder als Mattenware (Stein- oder Glaswolle) erhält, ist jedoch im Baubereich eine technische Grundvoraussetzung für einen effektiven Einsatz unter realistischen Bedingungen. Ferner besteht generell das Risiko, dass Systeme mit eingeschweißten oder großflächig verkapselten Aerogelelementen auf längere Sicht undicht werden und somit die gewünschten Wärmeleitungseigenschaften verloren gehen.

Im Übrigen bereitet es große technische Schwierigkeiten, monolithische und zugleich große Aerogelblöcke herzustellen. Aus diesem Grund wird häufig versucht, Anwendungen auf der Basis von Aerogelgranulaten zu entwickeln. Unterschiedliche Typen von derartigen Aerogelgranulaten sind daher heutzutage als Schüttgut erhältlich.

Unabhängig davon, ob man Aerogele als Schüttgut oder in monolithischer Form verwendet, besteht ein generelles Stabilitätsproblem. Denn Aerogele sind bedingt durch ihre poröse Struktur sehr zerbrechlich und halten mechanischen Beanspruchungen kaum Stand. Dies führt zum Beispiel bei Aerogelschüttgütern dazu, dass sich das anfängliche Schüttgutvolumen mit der Zeit verringert, da die Granulate durch Vibration, Reibung oder äußeren Druck zerbrechen und teilweise zu Staub zerrieben werden. Eine großtechnische Verarbeitung ist daher nur schwer möglich.

Es ist daher Aufgabe der vorliegenden Erfindung, einen Verbundkörper auf Basis eines porösen Festkörpers vorzuschlagen, insbesondere zur Verwendung als Wärmedämmmaterial, der eine erhöhte Festigkeit aufweist und zudem eine Größenveränderung durch Zuschneiden des Wärmedämmmaterials als Funktion der jeweiligen Erfordernisse erlaubt.

Erfindungsgemäß wird diese Aufgabe gelöst durch einen Verbundkörper, insbesondere zur Verwendung als Wärmedämmmaterial, umfassend:
- einen Kern aus einem porösen Festkörper; und
- eine den Kern umschließende Ummantelungsschicht.

Die Ummantelungsschicht, die insbesondere aus einem Metallmaterial gebildet sein kann, verleiht dem porösen Festkörperkern die erforderliche Festigkeit, damit ein entsprechendes Granulat bei mechanischer Beanspruchung nicht zerrieben wird.

Vorzugsweise ist vorgesehen, dass der poröse Festkörper wenigstens ein Material enthält, das ausgewählt ist aus der Gruppe gebildet durch Metalloxide, Aerogele, Xerogele, Zeolite, Kryogele, Silikatgele, Kieselglas, Fällungskieselsäuren und pyrogene Kieselsäuren, wobei zweckmäßigerweise die Dichte des porösen Festkörpers zwischen 0,01 g/cm³ und 0,2 g/cm³ beträgt und zudem vorteilhafterweise die mittlere Porengröße des porösen Festkörpers zwischen 0,1 µm und 1 nm beträgt.

Ein derartiger erfindungsgemäßer Verbundkörper weist aus den oben genannten Gründen verhältnismäßig geringe Festkörperwärmeleitung auf. Um zusätzlich den Wärmetransport durch Wärmestrahlung zu verringern, kann in einer zweckmäßigen Weiterbildung der Erfindung vorgesehen sein, dass der Kern ferner wenigstens einen Infrarotstrahlen absorbierenden Stoff, vorzugsweise Kohlenstoff oder Titandioxid, enthält. Die von diesen Zusatzstoffen absorbierte Energie wird daraufhin durch die deutlich schwächere Festkörperwärmeleitung des porösen Festkörpers, bspw. eines Aerogelgerüsts, weiter transportiert. Das sogenannte "Infrarotfenster" poröser Festkörper kann auf diese Weise fast vollständig geschlossen werden.

Zweckmäßigerweise beträgt der Durchmesser des Kerns zwischen 0,5 mm und 5 mm, um eine gute Verarbeitbarkeit der erfindungsgemäßen Verbundkörper zu einem Wärmedämmmaterial zu gewährleisten.

In einer besonders vorteilhaften Weiterbildung der Erfindung ist die Ummantelungsschicht dazu ausgelegt, den Kern gasdicht zu umschließen. Bringt man in diesem Fall nämlich die Ummantelungsschicht im Vakuum auf den porösen Festkörperkern auf, so wird das Vakuum im Kern eingeschlossen, und somit der Wärmetransport durch Konvektion deutlich verringert, was die thermische Isolierung verbessert.

Unabhängig davon, ob die Ummantelungsschicht gasdicht ist oder nicht, kann sie zweckmäßigerweise durch eine Mehrzahl von Teilschichten gebildet sein. Eine erste Teilschicht, die direkt auf den porösen Festkörperkern aufgebracht wird, kann dann aus einem Material gebildet sein, bzw. Kohlenstoff, welches Oberflächenporen des Festkörpers verschließt und als Haftgrund für eine zweite Teilschicht fungiert. Die zweite Teilschicht kann aus einem Material gebildet sein, bspw. aus Silizium, welches noch verbliebene offene Poren verschließt und dem System eine erhöhte mechanische Stabilität verleiht. Auf einer derartigen zweiten Teilschicht kann ggf. eine dritte Teilschicht , bspw. aus Aluminium, vorgesehen sein, die die vakuumdichte Versiegelung des Verbundkörpers sicherstellt.

Ein entsprechender bevorzugter Verbundkörper gemäß der Erfindung weist somit den folgenden Aufbau auf:
- einen Kern, der ein poröses Aerogel auf SiO₂-Basis enthält;
- eine den Kern umschließende erste Teilschicht, die Kohlenstoff enthält;
- eine die erste Teilschicht umschließende zweite Teilschicht, die Silizium enhält; und
- eine die zweite Teilschicht umschließende dritte Teilschicht, die Aluminium enthält.

Je nach Stabilitäts- und Gasdichtigkeitsanforderungen kann die Dicke der Ummantelungsschicht zweckmäßigerweise zwischen 0,01 µm und 1,0 µm betragen.

Die erfindungsgemäßen Verbundkörper können auf unterschiedliche Weise zu einem stabilen Verbundmaterial zusammengefügt werden, welches vor Ort bspw. als Wärmedämmmaterial zuschneidbar ist:

So kann ein entsprechendes Verbundmaterial erhalten werden, indem eine Vielzahl von erfindungsgemäßen Verbundkörpern in eine Kunstharzmatrix eingebettet wird. Zur Herstellung werden die erfindungsgemäßen ummantelten porösen Festkörperkerne bspw. mit 5 bis 10 Volumenprozent flüssigem Kunstharz vermischt. Dieses Gemenge kann vor dem Aushärten des Kunstharzes in eine beliebige Form gebracht werden oder bspw. als Wärmeisolationsputz verwendet werden.

Alternativ ist es auch möglich, je nach Material der Ummantelungsschicht das geformte Schüttgut einem Sinterprozess zu unterziehen, also ein Verbundmaterial aus einer Vielzahl von gesinterten erfindungsgemäßen Verbundkörpern herzustellen. Dabei backen die das Schüttgut konstruierenden ummantelten Festkörperkerne unter Hitzeeinwirkung an ihren Kontaktstellen zusammen. Gesinterte Verbundmaterialien weisen gegenüber kunstharzgebundenen Verbundmaterialien den Vorteil einer erhöhten Temperaturbeständigkeit auf.

Ein erfindungsgemäßes Verfahren zur Herstellung eines derartigen Verbundkörpers umfasst die Schritte:
a) Bereitstellen eines Kerns aus einem porösen Festkörper; und
b) Beschichten des Kerns mit einer Ummantelungsschicht.

Vorteilhafterweise wird hierbei Schritt b) im Vakuum ausgeführt, um in Verbindung mit einer gasdichten Ummantelungsschicht den porösen Festkörperkern vakuumdicht zu versiegeln und somit zusätzlich zur geringen Festkörperwärmeleitung auch Konvektionsvorgänge im derart hergestellten erfindungsgemäßen Verbundkörper weitgehend zu unterbinden.

Zweckmäßigerweise ist hierbei vorgesehen, dass im Schritt b) ein PVD-Verfahren, ein CVD-Verfahren und/oder ein MBE-Verfahren ausgeführt wird, wobei insbesondere ein PVD-Verfahren mit Kathodenzerstäubung eines Targets ausgeführt werden kann, welches das Material für die Ummantelungsschicht enhält. PVD-Verfahren (Physical Vapor Deposition, physikalische Gasphasenabscheidung), CVD-Verfahren (Chemical Vapor Deposition, chemische Gasphasenabscheidung) und MBE-Verfahren (Molecular Beam Epitaxy, Molekularstrahlepitaxie) sind technisch ausgereifte Verfahren, die bei niedrigem Druck arbeiten und werden je nach Anwendungsgebiet bereits vielfältig in der Industrie eingesetzt.

Mit Hilfe der genannten Beschichtungsverfahren werden die porösen Festkörperkerne mit einer äußeren und gasundurchlässigen Materialschicht überzogen, die den Kernen zudem eine hohe mechanische Stabilität verleiht. Da die meisten dieser Verfahren unter Vakuum stattfinden, sind die porösen Festkörperkerne, bspw. Aerogelkörper, nach Abschluss der Beschichtung bereits evakuiert und weisen deshalb eine deutlich verringerte Gesamtwärmeleitfähigkeit auf.

Bei geeigneter Wahl der Beschichtungsmaterialien ist gewährleistet, dass die Oberflächenporen der porösen Festkörperkerne dauerhaft gasundurchlässig versiegelt werden. Dafür eignen sich sowohl metallische als auch nicht-metallische Beschichtungsmaterialien, die mittels PVD-, CVD-, und/oder MBE-Verfahren jeweils aufgebracht werden können. Das Arbeiten mit metallischen Materialien verspricht eine besonders gute Gasundurchlässigkeit bei gleichzeitig guter Oberflächenhaftung. Insbesondere im Fall des Aufbringens einer Ummantelungsschicht, die aus mehreren Teilschichten gebildet ist, ist es selbstverständlich möglich, je nach Material, gewünschter Schichtdicke etc. verschiedene Beschichtungsverfahren für die Aufbringung der einzelnen Teilschichten einzusetzen.

Eine erfindungsgemäße Vorrichtung zum Durchführen dieses Verfahrens umfasst:
- ein evakuierbares Gehäuse;
- eine Zufuhrvorrichtung zum Zuführen eines Granulats von porösen Festkörpern in das Gehäuse;
- eine in dem Gehäuse angeordnete Transportvorrichtung, insbesondere Förderband, zum Transportieren des Granulats aus dem Bereich der Zufuhrvorrichtung in den Bereich einer Ausgabevorrichtung; und
- eine im Bereich der Transportvorrichtung angeordnete Beschichtungsvorrichtung, insbesondere Kathodenzerstäubungsanlage, zum Beschichten des Granulats.

Im einfachsten Fall kann die Zufuhrvorrichtung bspw. eine zu öffnende Klappe mit einer Schütte umfassen, über die das Granulat auf die Transportvorrichtung gelangt. Hierbei würde jedoch jeweils ein im Gehäuse erzieltes Vakuum zerstört werden. Zweckmäßigerweise ist daher vorgesehen, dass die Zufuhrvorrichtung eine evakuierbare Zufuhrkammer und eine öffen- und schließbare Vakuumtür zwischen der Zufuhrkammer und dem Gehäuse umfasst. Auf diese Weise kann das Granulat über die gleichsam als Schleuse wirkende Zufuhrkammer in das Gehäuse eingebracht werden, ohne ein dort durch Abpumpen herbeigeführtes Vakuum zu stören. In entsprechender Weise ist zweckmäßigerweise vorgesehen, dass die Ausgabevorrichtung eine evakuierbare Ausgabekammer und eine öffen- und schließbare Vakuumtür zwischen der Ausgabekammer und dem Gehäuse umfasst. Somit kann das mit Hilfe der Beschichtungsvorrichtung ummantelte Granulat auch ohne Störung des Vakuums im Gehäuse entnommen werden.

Um eine möglichst gleichmäßige Aufbringung der Ummantelungsschicht auf die porösen Festkörperkerne zu gewährleisten, während sie mit Hilfe der Transportvorrichtung, bspw. des genannten Förderbands, durch den Bereich der Beschichtungsvorrichtung transportiert werden, ist die Transportvorrichtung vorteilhafterweise mit einer Rüttelvorrichtung zum Durchrütteln des Granulats versehen. Beispielsweise kann das Förderband mittels eines Piezoelements mit regelbarer Frequenz in Vibration versetzt werden. Die porösen Festkörperkerne werden dann derart durchgerüttelt, dass sie während ihres Transports im Gehäuse alle Oberflächenbereiche gegenüber der Beschichtungsvorrichtung exponieren.

Bevorzugte Ausführungsformen der Erfindung werden nachfolgend in Verbindung mit den beigefügten Zeichnungen erläutert werden. Es zeigt:
Figur 1 eine schematische Querschnittsansicht einer ersten einfachen Ausführungsform des erfindungsgemäßen Verbundkörpers;
Figur 2 eine Grafik zur Erläuterung des Wärmeleitverhaltens des erfindungsgemäßen Verbundkörpers als Funktion des Luftdrucks;
Figur 3 eine schematische Querschnittsansicht einer weiteren Ausführungsform des erfindungsgemäßen Verbundkörpers, bei der die Ummantelungsschicht aus mehreren Teilschichten besteht; und
Figur 4 eine vereinfachte Darstellung einer erfindungsgemäßen Vorrichtung zur Herstellung erfindungsgemäßer Verbundkörper.

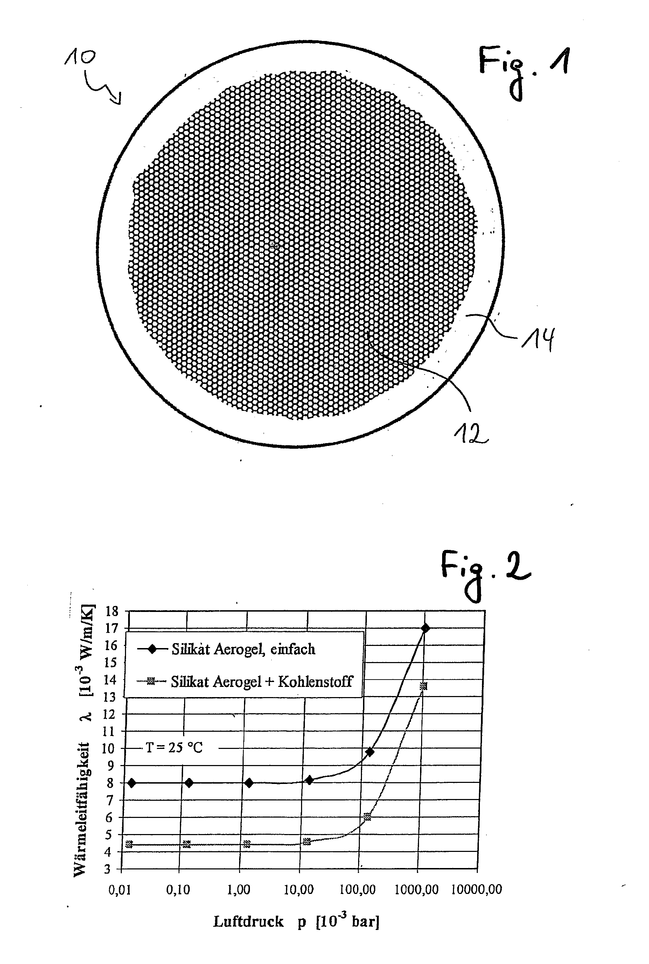

Figur 1 zeigt eine schematische Querschnittsansicht einer einfachen Ausführungsform des erfindungsgemäßen Verbundkörpers 10. Dieser umfasst einen Kern 12 aus einem porösen Festkörper, bspw. einem Metalloxid, einem Aerogel, einem Xerogel, einem Zeolit, einem Kryogel, einem Silikatgel, einem Kieselglas, einer Fällungskieselsäure oder einer pyrogenen Kieselsäure. Im folgenden wird ohne Beschränkung angenommen, dass der Kern 12 aus einem Aerogel gebildet sei. Man erkennt in Figur 1 deutlich die Porösität des Kerns 12, der eine Vielzahl großer Poren im Aerogel-Festkörpergerüst aufweist.

Der Durchmesser des Kerns 12 beträgt typischerweise zwischen 0,5 mm und 5 mm, die mittlere Porengröße liegt meist im Bereich zwischen 0,1 µm und 1 nm, was bei den meisten porösen Festkörpern mit einer typischen Dichte des Kerns 12 zwischen 0,01 g/cm³ und 0,2 g/cm³ einhergeht.

Der Kern 12 ist von einer Ummantelungsschicht 14 umschlossen, die mittels eines weiter unten ausführlich beschriebenen Beschichtungsverfahrens auf den Kern 12 aufgebracht worden ist. Die Dicke der Ummantelungsschicht beträgt typischerweise zwischen 0,01 µm und 1,0 µm. Es wird somit deutlich, dass Figur 1 hinsichtlich der Größenverhältnisse zwischen Kern 12 und Ummantelungsschicht 14 nicht maßstabsgerecht ist.

Die Ummantelungsschicht 14 verleiht dem erfindungsgemäßen Verbundkörper 10 eine erhöhte Festigkeit gegenüber Abrieb, so dass derartige Körper 10 in Form von Schüttgut industriell eingesetzt werden können, ohne zu Staub zerrieben zu werden.

In der in Figur 1 schematisch dargestellten Ausführungsform ist die Ummantelungsschicht 14 aus Kohlenstoff gefertigt, was die beträchtliche Wärmedämmfähigkeit des Aerogelkerns 12 weiter verbessert, wie nun anhand von Figur 2 in Verbindung mit der nachfolgenden Tabelle erläutert werden wird:

**Tabelle: Wärmeleitfähigkeiten verschiedener Materialien**

| Nr. | Stoff | Massendichte ρ [kg/m³] | Bemessungswert der Wärmeleitfähigkeit λ [W/(m·K)] |
|---|---|---|---|
| 1 | Kupfer | 8900 | 380 |
| 2 | Beton armiert (mit 2 % Stahl) | 2400 | 2,5 |
| 3 | Quarzglas | 2200 | 1,4 |
| 4 | Dachziegel aus Ton | 2000 | 1,0 |
| 5 | Wasser bei 0 C° | 1000 | 0,60 |
| 6 | Mauerwerk aus Kalksandstein mit Normal-mörtel/Dünnbettmörtel nach DIN 106-1 | 1200 | 0,56 |
| 7 | Gipskartonplatten nach DIN 18180 | 900 | 0,25 |
| 8 | Mauerwerk aus Porenbeton-Plansteinen mit Dünnbettmörtel nach DIN 4165 | 550 | 0,18 |
| 9 | Polystyrol(PS)-Partikelschaum | ≥20 | 0,040 |
| 10 | Polystyrol-Extruderschaum | ≥25 | 0,035 |
| 11 | Trockene, ruhende Luft | 1,23 | 0,025 |
| 12 | Aerogel auf SiO₂-Basis, in Luft | 100 | 0,018 |

Wie der obigen Tabelle zu entnehmen ist, weist ein Aerogelköper auf SiO₂-Basis in Luft eine typische Wärmeleitfähigkeit von ca. 0,018 W/(m·K) auf. Dieser Wert liegt noch unter jenem von trockener und ruhender Luft und beträgt nur ca. 50 % der Wärmeleitfähigkeit von Polystyrolschaum, einem häufig zur Gebäudeisolation eingesetzten Dämmmaterial.

Aus diesem Grund stellen bereits einfache erfindungsgemäße Aerogelkerne 12, die mittels einer Ummantelungsschicht 14 abriebsfest gemacht werden, einen interessanten Dämmstoff dar, der bspw. bei Einbettung in einer Kunstharzmatrix oder durch sintern in nahezu beliebige Formen gebracht und vor Ort in Form von Dämmplatten verbaut werden kann.

Die Dämmwirkung lässt sich durch geeignete Wahl des Materials für die Ummantelungsschicht 14 weiter verbessern. Wie in Figur 2 dargestellt ist, bewirkt eine Ummantelung des Kerns 12 mit einer Kohlenstoffschicht aufgrund deren Infrarot-absorbierenden Eigenschaften einen weiteren Rückgang der Wärmeleitfähigkeit auf ca. 13-14·10⁻³ W/(m.K). Grund hierfür ist, wie oben bereits erläutert wurde, dass die Kohlenstoff-Ummantelungsschicht 14 durch Absorption von Infrarotstrahlen den strahlungsbasierten Wärmetransport weitgehend unterbindet. Die von der Kohlenstoff-Ummantelungsschicht 14 absorbierte Strahlungsenergie kann dann nur noch durch die deutlich schwächere Festkörperwärmeleitung im Kern 12 weiter transportiert werden.

Wie sich aus Figur 2 ergibt, kann die Wärmedämmfähigkeit eines erfindungsgemäßen Verbundkörpers in hohem Maße gesteigert werden, indem man den in ihm herrschenden Luftdruck absenkt. Hierzu nimmt man die Beschichtung des Kerns 12 im Vakuum vor, und wählt als Material für die Ummantelungsschicht 14 eine Substanz, die geeignet ist, den Kern 12 gasdicht einzuschließen. Vorzugsweise wählt man hierzu eine metallische Ummantelungsschicht 14, grundsätzlich können jedoch auch nicht-metallische, organische oder anorganische Materialien für die Ummantelungsschicht 14 ausgewählt werden.

Wie man in Figur 2 erkennt, genügt bereits ein großtechnisch problemlos einstellbares Vakuum von ca. 1 mbar während der Beschichtung, um die Wärmeleitfähigkeit des erfindungsgemäßen Verbundkörpers auf ca. 8·10⁻³ W/(m·K) ohne Kohlenstoff-Ummantelungsschicht bzw. auf ca. 4,5·10⁻³ W/(m·K) mit einer Kohlenstoff-Ummantelungsschicht 14 abzusenken.

Die Gasdichtigkeit des unter IR-Absorptionsaspekten vorteilhaften Materials Kohlenstoff ist jedoch unbefriedigend, so dass in der Praxis das im Kern 12 während der Beschichtung erzeugte Vakuum durch eine Ummantelungsschicht 14 aus Kohlenstoff nicht gehalten werden kann.

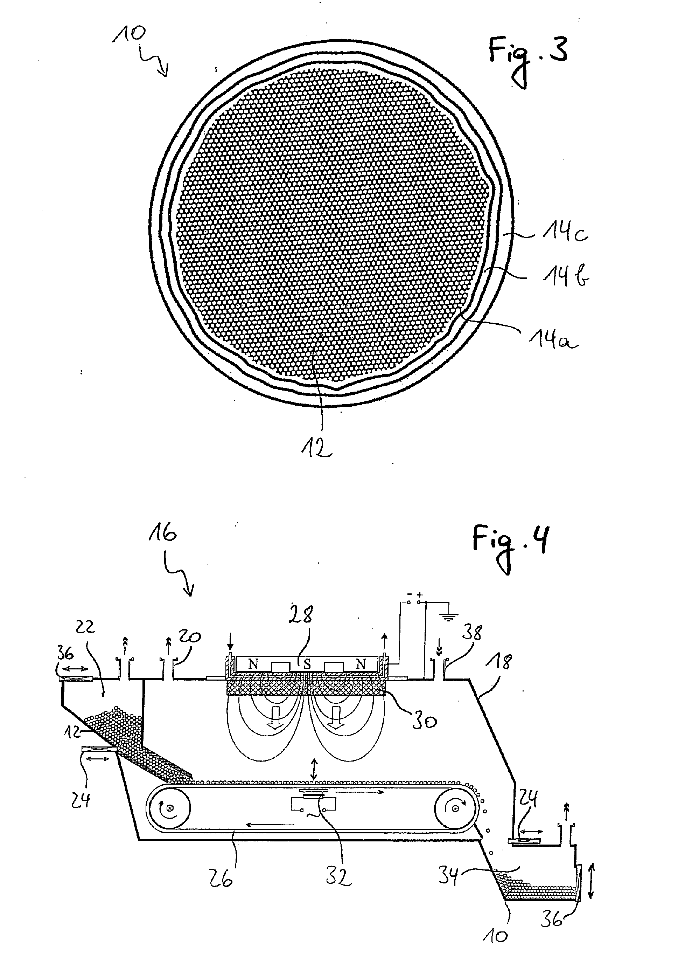

In einer in Figur 3 schematisch im Querschnitt gezeigten Weiterbildung des erfindungsgemäßen Verbundkörpers 10 ist daher die Ummantelungsschicht 14 aus drei Teilschichten 14a, 14b und 14c aufgebaut. In diesem nicht beschränkenden Beispiel handelt es sich bei der ersten Teilschicht 14a wiederum um eine Schicht, die im Wesentlichen Kohlenstoff enthält, um IR-Strahlen zu absorbieren. Zudem haben sich solche Schichten als gut geeignet erwiesen, um Oberflächenporen des Kerns 12 zu verschließen. Die in Figur 3 gezeigte zweite Teilschicht 14b umfasst im Wesentlichen Silizium, welches noch verbliebene offene Poren abdichtet und dem Verbundkörper 10 eine erhöhte mechanische Stabilität verleiht.

Die äußere dritte Teilschicht 14c enthält im Wesentlichen Aluminium und bewerkstelligt die langfristige Vakuumversiegelung des evakuierten Inneren des Verbundkörpers 10.

Es versteht sich, dass sowohl die Zahl der Teilschichten als auch ihre Reihenfolge und ihre Materialien variiert werden können. Insbesondere erkennt man in Figur 2, dass auch ein einfacherer erfindungsgemäßer Verbundkörper 10 mit einem Aerogelkern 12, der durch eine einzige Ummantelungsschicht 14 ohne Kohlenstoff vakuumdicht versiegelt ist, eine für viele Anwendungen ausreichende Wärmedämmung erlaubt.

Bei der Wahl eines geeigneten Beschichtungsverfahrens zum Aufbringen der Ummantelungsschicht 14 sind unterschiedliche Kriterien von Bedeutung. Bei Festkörpern mit porösen Oberflächen sind relativ große Schichtdicken nötig. Verfahren mit hohen Beschichtungsraten sind deshalb von Vorteil. Im Falle von Schüttgütern, wie zum Beispiel bei Aerogel Kügelchen, muss die Oberfläche von allen Seiten möglichst gleichmäßig beschichtet werden. Ein Beschichtungsverfahren mit weitgehend ungerichtetem Materialfluss stellt deshalb einen weiteren Vorteil dar. Sowohl CVD-Verfahren als auch PVD-Verfahren auf der Basis thermisch verdampfter Beschichtungsmaterialien liefern hohe Beschichtungsraten mit einem relativ ungerichteten Materialfluss. Die Nachteile der genannten Verfahren sind eine beschränkte Auswahl an Beschichtungsmaterialien und je nach Fall, nur schwer kontrollierbare Beschichtungsprozesse. CVD-Verfahren arbeiten darüber hinaus mit Gasdrücken, die für die hier beschriebene Anwendung häufig zu hoch sind.

Einen Kompromiss bilden so genannte Kathodenzerstäubungsverfahren, die auch als Sputterverfahren bekannt sind und zu den PVD-Verfahren gehören. Es existieren unterschiedliche Verfahren der Kathodenzerstäubung, bei denen es sich in allen Fällen um plasmagestützte Verfahren handelt. Zu den industriell am häufigsten genutzten Verfahren zählen die mit einem Gleichstrom- (DC-Sputtern) und einem Hochfrequenzplasma (HF-Sputtern) arbeitenden Zerstäubungsverfahren (Kathodenzerstäubung).

Kathodenzerstäubungsverfahren finden in einem vakuumdichten Rezipienten bei Partialdrücken von 10⁻² bis 10⁻⁴ mbar statt. Zur Zündung und zur Selbsterhaltung eines Plasmas über dem Zerstäubungsmaterial wird ein Arbeitsgas benötigt. In der Regel handelt es sich dabei um Argon. Beim DC-Sputtern wird an das Zerstäubungsmaterial (Kathode) eine negative Spannung von einigen hundert Volt angelegt, während der Vakuumrezipient auf masse liegt. Diese Potentialdifferenz sorgt dafür, dass positiv geladene Argonionen in Richtung des Zerstäubungsmaterials beschleunigt werden. Zum Zünden des Plasmas reicht bereits die natürlich vorliegende Teilionisierung des ansonsten neutralen Arbeitsgases aus. Die im elektrischen Feld beschleunigten Argonionen treffen auf das Zerstäubungsmaterial und schlagen Atome oder ganze Atomverbände aus der Materialoberfläche. Das zerstäubte, elektrisch neutrale Material diffundiert in Richtung der zu beschichtenden Substratoberfläche und wird dort nach Abgabe seiner kinetischen Energie abgeschieden. Die dabei ablaufenden Adsorptionsprozesse sind komplex und man spricht der Einfachheit halber nur von Kondensation. Wenn die Ionen des Arbeitsgases auf die Kathode treffen, werden Sekundärelektronen aus dem Kathodenmaterial gelöst. Durch Stöße sorgen diese für eine zusätzliche Ionisierung des Arbeitsgases. Bei einer ausreichend großen lonisierungsrate entsteht ein sich selbst erhaltendes Plasma über dem Zerstäubungsmaterial.

Durch Anlegen eines magnetischen Feldes, welches das Kathodenmaterial durchdringt und in das Plasma reicht, werden die Elektronen auf Kreisbahnen um die Feldlinien gezwungen. Durch die magnetisch induzierten Bewegungsbahnen verweilen die Elektronen länger im Plasma. Die größere Elektronendichte im Plasma führt zu erhöhten Stoßwahrscheinlichkeiten der Elektronen mit dem Arbeitsgas und ermöglicht schließlich deutlich größere Abscheidungsraten. Man spricht in diesem Fall von einer Magnetron-Sputterquelle. Auf dem Weg zum Substrat stoßen die Atome des Zerstäubungsmaterials mit Gasatomen zusammen. Dabei verlieren sie an kinetischer Energie und verändern auch ihre Bewegungsrichtung. Letzteres führt zu einem weniger gerichtetem Materialfluß.

Beim DC-Sputtern muss die Kathode, also das Zerstäubungsmaterial, elektrisch leitfähig sein. Bei einem nicht leitfähigen Material bildet sich an der Kathodenoberfläche ein positiver Ladungsstau, der zum "Absterben" des Plasmas führt. Dielektrische Kathodenmaterialien lassen sich jedoch mit dem HF-Sputterverfahren abscheiden. Dabei wird anstatt einer konstanten Spannung eine hochfrequente Wechselspannung (f = 13,56 MHz) angelegt. Abwechselnd werden dabei entweder Ionen des Arbeitsgases beschleunigt oder der positive Ladungsstau auf der Kathodenoberfläche beseitigt. Eine weitere Möglichkeit, dielektrische Materialien abzuscheiden, ist das reaktive Sputtern. Dabei wird neben dem Arbeitsgas ein Reaktionsgas in den Vakuumrezipienten gegeben. Dieses reagiert dann mit dem Zerstäubungsmaterial und auf dem Substrat scheidet sich der Reaktant ab. Zur Herstellung von Oxidschichten wird zum Beispiel Sauerstoff (O₂) als Reaktionsgas benutzt. Das Abscheiden dielektrischer und lichtdurchlässiger Schichten mit reaktiven Sputterverfahren ist heute bereits gängige Praxis in der optischen Industrie.

Figur 4 zeigt schematisch eine erfindungsgemäße Vorrichtung 16 zur Durchführung des erfindungsgemäßen Verfahrens, um auf diese Weise erfindungsgemäße Verbundkörper 10 herzustellen.

Die Vorrichtung 16 umfasst ein Gehäuse 18, in der Regel aus Metall, welches über einen Absaugstutzen 20 und (nicht gezeigte) Pumpen evakuierbar ist.

In dem in Figur 4 linken Bereich des Gehäuses 18 ist eine ebenfalls evakuierbare Zufuhrkammer 22 vorgesehen, die über eine öffen- und schließbare Vakuumtür 24 mit dem Inneren des Gehäuses 18 in Verbindung gesetzt werden kann. Eine Außentür 36 erlaubt das Einfüllen eines Granulats von porösen Festkörpern, bspw. Aerogelkügelchen 12, in die Zufuhrkammer 22.

Bei einem von außen, vorzugsweise über einen Computer, gesteuerten Öffnen der entsprechenden Vakuumtür 24 zwischen der Zufuhrkammer 22 und dem Gehäuse 18 rutschen die Festkörperkügelchen auf ein im Gehäuse 18 arbeitendes Förderband 26. Die Kügelchen 12 (selbstverständlich können die porösen Festkörper des Granulats auch jede andere regelmäßige oder unregelmäßige geometrische Gestalt aufweisen) werden durch das Förderband unter einer Magnetron-Sputterquelle 28 hindurchtransportiert. Zerstäubungsmaterial aus einem Target 30 wird dabei in Abwärtsrichtung auf dem Schüttgut, d. h. den Kügelchen, abgeschieden. Ein Piezoelement wirkt als Rüttelvorrichtung 32 und versetzt das Förderband 26 mit einer regelbaren Frequenz in Vibration, so dass die Aerogelkügelchen wiederholt und in unregelmäßiger Weise hochgeschleudert werden und mit veränderter Orientierung wieder auf dem Förderband 26 landen. Auf diese Weise wird für eine allseitig gleichmäßige Beschichtung des Schüttguts gesorgt. Die Beschichtungsrate der Magnetron-Sputterquelle 28 und die Geschwindigkeit des Förderbands 26 bestimmen die Dicke der Ummantelungsschicht 14 auf jedem Kern 12 des Schüttguts.

An dem in Figur 4 rechten Ende des Förderbands 26 fallen die nunmehr fertiggestellten erfindungsgemäßen Verbundkörper 10 durch eine ebenfalls öffen- und schließbare Vakuumtür 24 in eine Ausgabekammer 34, welche ebenfalls evakuierbar ist. Beim Beladen der Zufuhrkammer 22 bzw. beim Entladen der Ausgabekammer 34 über entsprechende Außentüren 36 müssen die jeweiligen Vakuumtüren 24 geschlossen sein, um das Vakuum im Gehäuse 18 nicht zu beeinträchtigen.

Im Übrigen weist das Gehäuse 18 einen Einlassstutzen 38 auf, um Arbeitsgase zum reaktiven Beschichten in das Gehäuse 18 einzubringen.

Die Magnetron-Sputterquelle 28 als einzige Materialquelle in Figur 4 kann durch mehrere hintereinander geschaltete Quellen ersetzt werden. Dies ermöglicht neben einem effizienteren Abscheidungsprozess auch die gleichzeitige Verwendung von DC- und HF-Quellen. Die flexible Wahl der Beschichtungsquellen und die Möglichkeit des reaktiven Beschichtens ermöglichen eine große Auswahl an Beschichtungsmaterialien. Auf diese Weise können bspw. die mehreren Teilschichten 14a, 14b, 14c des erfindungsgemäßen Verbundkörpers 10 in Figur 3 in einem Arbeitsschritt aufgebracht werden.

Die vakuumdicht versiegelten, porösen Schüttgüter, wie zum Beispiel Aerogelschüttgüter, lassen sich als thermisch isolierende Zuschlagstoffe in konstruktiven Materialien wie zum Beispiel Gipsplatten verwenden. Derartige Konstruktionselemente können im Innenausbau verwendet werden. Dazu zählt auch die Installation abgehängter Decken in großen Räumen oder Hallen, die während der Heizperiode große Energiemengen verschlingen oder sich im Sommer schnell aufheizen. Ähnlich wie bei latenter Wärme speichernden Zuschlagsstoffen können so neuartige Konstruktionselemente entwickelt werden, die für eine deutliche Verbesserung des Raumklimas sorgen.

Die vakuumdicht versiegelten, porösen Schüttgüter können auch als eigenständiger Verbundwerkstoff eingesetzt werden. In diesem Fall werden die vakuumversiegelten Kugeln zum Beispiel mit fünf bis zehn Volumenprozent flüssigem Kunstharz vermischt. Dieses Gemenge kann vor dem Aushärten des Kunstharzes in eine beliebige Form gebracht werden oder zum Beispiel als Wärmeisolationsputz verwendet werden. Es ist auch denkbar, je nach Beschichtungsmaterial, das geformte Schüttgut einem Sinterprozess zu unterziehen. Dabei backen die das Schüttgut konstituierenden Elemente unter Hitzeeinwirkung an ihren Kontaktstellen zusammen. Gesinterte Verbundwerkstoffe haben gegenüber kunstharzgebundenen Verbundmaterialien den Vorteil, dass sie deutlich temperaturbeständiger sind.

Die oben beschriebenen, neuen Materialien lassen sich zum Beispiel vorteilhaft bei der Renovierung von Gebäuden mit historischen Fassaden einsetzen. Für den Erhalt der Originalfassade ist die thermische Isolierung der Außenflächen meist ausgeschlossen. Um aber bei der thermischen Isolierung der Innenwände möglichst wenig Wohnraum zu verlieren, muss das verwendete Isolationsmaterial so dünn wie möglich sein. Anstatt speziell vorgefertigter Vakuumpaneele, können hier zum Beispiel individuell zuschneidbare Platten auf der Basis von vakuumisolierten Aerogelkugeln verwendet werden.

Ein anderes Beispiel, bei dem die Dicke der thermischen Isolation von Bedeutung ist, sind Haushaltskühl- oder Gefriergeräte. Da die äußeren Abmessungen dieser Geräte weitgehend genormt sind, kann die thermische Isolierung eines Kühlschranks zum Beispiel nicht beliebig dick sein. Eine zu dicke Isolationsschicht würde das innere Nutzvolumen des Kühlschranks verringern. Die Größe des Kühlschrankvolumens ist aber neben dem Energieverbrauch ein Verkaufsargument. Mit den hier vorgeschlagenen Materialien lassen sich Kühl- und Gefrierschränke realisieren, die bei gleichen äußeren Abmessungen ein vergrößertes Nutzvolumen aufweisen.

Eine weitere Anwendung ist die thermische Isolierung von Warmwasserspeichern. Bei diesen kann mit den hier vorgeschlagenen, neuen Materialien entweder das Aufbauvolumen verringert oder das Wärmehaltevermögen erhöht werden. Besonders interessant ist in diesem Zusammenhang die thermische Isolierung von Langzeitwärmespeichern, die mit dem Arbeitsmedium Parafin arbeiten - so genannte Latentwärmespeicher, die immer häufiger auf dem Markt angeboten werden.

Spezielle Anwendungen, wie die thermische Isolierung von supraleitenden Spulen oder Leitungssysteme für ultrakalte, verflüssigte Gase sind ebenfalls potentielle Anwendungsgebiete.

Die vakuumversiegelten, porösen Festkörper lassen sich einfach und effizient weiterverarbeiten und führen so zu hochwertigen Sekundärprodukten und neuen Anwendungen in unterschiedlichsten Bereichen.

## Patentansprüche

1. Verbundkörper (10), insbesondere zur Verwendung als Wärmedämmmaterial, umfassend:
- einen Kern (12) aus einem porösen Festkörper; und
- eine den Kern (12) umschließende Ummantelungsschicht (14).

2. Verbundkörper (10) nach Anspruch 1, **dadurch gekennzeichnet, dass** der poröse Festkörper wenigstens ein Material enthält, das ausgewählt ist aus der Gruppe gebildet durch Metalloxide, Aerogele, Xerogele, Zeolite, Kryogele, Silikatgele, Kieselglas, Fällungskieselsäuren und pyrogene Kieselsäuren.

3. Verbundkörper (10) nach Anspruch 1 oder 2, **dadurch gekennzeichnet, dass** die Dichte des porösen Festkörpers zwischen 0,01 g/cm³ und 0,2 g/cm³ beträgt.

4. Verbundkörper (10) nach einem der Ansprüche 1 bis 3 **dadurch gekennzeichnet, dass** die mittlere Porengröße des porösen Festkörpers zwischen 0,1 µm und 1 nm beträgt.

5. Verbundkörper (10) nach einem der vorhergehenden Ansprüche, **dadurch gekennzeichnet, dass** der Kern (12) ferner wenigstens einen Infrarotstrahlen absorbierenden Stoff, vorzugsweise Kohlenstoff oder Titandioxid, enthält.

6. Verbundkörper (10) nach einem der vorhergehenden Ansprüche, **dadurch gekennzeichnet, dass** der Durchmesser des Kerns (12) zwischen 0,5 mm und 5 mm beträgt.

7. Verbundkörper (10) nach einem der vorhergehenden Ansprüche, **dadurch gekennzeichnet, dass** die Ummantelungsschicht (14) dazu ausgelegt ist, den Kern (12) gasdicht zu umschließen.

8. Verbundkörper (10) nach einem der vorhergehenden Ansprüche, **dadurch gekennzeichnet, dass** die Ummantelungsschicht (14) durch eine Mehrzahl von Teilschichten (14a, 14b, 14c) gebildet ist.

9. Verbundkörper (10) nach Anspruch 8, **gekennzeichnet durch**:
- einen Kern (12), der ein poröses Aerogel auf SiO₂-Basis enthält;
- eine den Kern (12) umschließende erste Teilschicht (14a), die Kohlenstoff enthält;
- eine die erste Teilschicht (14a) umschließende zweite Teilschicht (14b), die Silizium enhält; und
- eine die zweite Teilschicht (14b) umschließende dritte Teilschicht (14c), die Aluminium enthält.

10. Verbundkörper (10) nach einem der vorhergehenden Ansprüche, **dadurch gekennzeichnet, dass** die Dicke der Ummantelungsschicht (14) zwischen 0,01 µ m und 1,0 µm beträgt.

11. Verbundmaterial, umfassend eine Vielzahl von Verbundkörpern (10) nach einem der vorhergehenden Ansprüche, die in eine Kunstharzmatrix eingebettet sind.

12. Verbundmaterial, umfassend eine Vielzahl von gesinterten Verbundkörpern (10) nach einem der Ansprüche 1-10.

13. Verfahren zur Herstellung eines Verbundkörpers (10) nach einem der Ansprüche 1-10, umfassend die Schritte:
a) Bereitstellen eines Kerns (12) aus einem porösen Festkörper; und
b) Beschichten des Kerns (12) mit einer Ummantelungsschicht (14).

14. Verfahren nach Anspruch 13, **dadurch gekennzeichnet, dass** der Schritt b) im Vakuum ausgeführt wird.

15. Verfahren nach Anspruch 14, **dadurch gekennzeichnet, dass** im Schritt b) ein PVD-Verfahren, ein CVD-Verfahren und/oder ein MBE-Verfahren ausgeführt wird.

16. Verfahren nach Anspruch 15, **dadurch gekennzeichnet, dass** im Schritt b) ein PVD-Verfahren mit Kathodenzerstäubung eines Targets (30) ausgeführt wird, welches das Material für die Ummantelungsschicht (14) enthält.

17. Vorrichtung zum Durchführen des Verfahrens nach einem der Ansprüche 13-16, umfassend:
- ein evakuierbares Gehäuse (18);
- eine Zufuhrvorrichtung zum Zuführen eines Granulats von porösen Festkörpern in das Gehäuse (18);
- eine in dem Gehäuse (18) angeordnete Transportvorrichtung, insbesondere Förderband (26), zum Transportieren des Granulats aus dem Bereich der Zufuhrvorrichtung in den Bereich einer Ausgabevorrichtung; und
- eine im Bereich der Transportvorrichtung angeordnete Beschichtungsvorrichtung (28), insbesondere Kathodenzerstäubungsanlage, zum Beschichten des Granulats.

18. Vorrichtung nach Anspruch 17, **dadurch gekennzeichnet, dass** die Zufuhrvorrichtung eine evakuierbare Zufuhrkammer (22) und eine öffen- und schließbare Vakuumtür (24) zwischen der Zufuhrkammer (22) und dem Gehäuse (18) umfasst.

19. Vorrichtung nach Anspruch 17 oder 18, **dadurch gekennzeichnet, dass** die Ausgabevorrichtung eine evakuierbare Ausgabekammer (34) und eine öffen- und schließbare Vakuumtür (24) zwischen der Ausgabekammer (34) und dem Gehäuse (18) umfasst.

20. Vorrichtung nach einem der Ansprüche 17-19, **dadurch gekennzeichnet, dass** die Transportvorrichtung mit einer Rüttelvorrichtung (32) zum Durchrütteln des Granulats versehen ist.
